# EUROPEAN PATENT APPLICATION

(11) **EP 4 693 563 A1**
(43) Date of publication of application: **11.02.2026**
(21) Application number: 23929244.4
(22) Date of filing: 29.03.2023
(51) Int. Cl.: H01M 10/0567, H01M 10/052, H01M 10/0568

(54) **ELECTROCHEMICAL DEVICE AND ELECTRONIC DEVICE**

(71) Applicant: Ningde Amperex Technology Limited, Ningde, Fujian 352100 (CN)
(72) Inventor: LIU, Jianyu, Ningde, Fujian 352100 (CN); JIANG, Lanjie, Ningde, Fujian 352100 (CN); TANG, Chao, Ningde, Fujian 352100 (CN); ZHANG, Shan, Ningde, Fujian 352100 (CN)
(74) Representative: Kraus & Lederer PartGmbB
(86) International application number: PCT/CN2023/084723
(87) International publication number: WO 2024/197645

(57) **Abstract**

This application provides an electrochemical apparatus and an electronic apparatus. The electrochemical apparatus includes a positive electrode, a negative electrode, and an electrolyte, where the positive electrode includes a positive electrode active material, the positive electrode active material contains a manganese element and a cobalt element, and based on a total mass of the positive electrode active material, a mass percentage of the manganese element is B%; the electrolyte includes a sulfonyl imide lithium salt, and based on a total mass of the electrolyte, a mass percentage of the sulfonyl imide lithium salt is C%; where 0.1≤C≤15 and 0.02≤C/10B≤30. The electrochemical apparatus of this application can achieve both high-temperature stability and cycling stability at high voltages, and has excellent hotbox performance.

## Description

### TECHNICAL FIELD

This application relates to the field of electrochemical technologies, and specifically, to an electrochemical apparatus and an electronic apparatus.

### BACKGROUND

With the characteristics such as high specific energy, high operating voltage, low self-discharge rate, small size, and light weight, lithium-ion batteries are widely used in various fields such as electrical energy storage, portable electronic devices, and electric vehicles. With the expanding application range of lithium-ion batteries, the market has imposed higher requirements on lithium-ion batteries, for example, requiring lithium-ion batteries to have higher energy density and longer service life.

Increasing an operating cutoff voltage of a lithium-ion battery can significantly increase the energy density of the battery, but as the voltage increases, the stability of the battery, especially its high-temperature stability, deteriorates sharply. Positive electrode doping can significantly improve the thermal stability of the positive electrode. However, with the increase in doping elements, a positive electrode material is gradually dissolved, posing a significant impact on the thermal stability of the negative electrode. This application primarily achieves both thermal stability and cycling stability of the positive electrode and negative electrode by adjusting the positive electrode material and the electrolyte.

### SUMMARY

The purpose of this application is to provide an electrochemical apparatus and an electronic apparatus to improve the high-temperature cycling performance, room-temperature cycling performance, and hotbox performance of the electrochemical apparatus. Specific technical solutions are as follows.

In one embodiment, this application provides an electrochemical apparatus. The electrochemical apparatus includes a positive electrode, a negative electrode, and an electrolyte, where the positive electrode includes a positive electrode active material, the positive electrode active material contains a manganese element and a cobalt element, and based on a total mass of the positive electrode active material, a mass percentage of the manganese element is B%; the electrolyte includes a sulfonyl imide lithium salt, and based on a total mass of the electrolyte, a mass percentage of the sulfonyl imide lithium salt is C%; where 0.1≤C≤15 and 0.02≤C/10B≤30.

In some embodiments, 0.05≤C/10B≤5. In some embodiments, 0.05≤C/10B≤2.5.

The inventors of this application have found that introducing the doping element Mn has a significant effect on improving the high-temperature stability of the positive electrode material at high voltages. Without being limited to any theory, this may be because Mn is stable to O, which improves the structural stability of the positive electrode material. However, it was also found that an excessively high percentage of the Mn element deteriorates the thermal stability of the negative electrode, and by introducing a sulfonyl imide lithium salt into the electrolyte, both the thermal stability of the positive electrode and the thermal stability of the negative electrode can be achieved. It was also found that the effect is most significant when C/10B is within the above range. Without being limited to any theory, this may be due to the introduction of the lithium salt, which suppresses the dissolution of manganese ions and improves the thermal stability and ionic conductivity of the electrolyte, compensating for the deterioration of dissolution of the positive electrode material caused by metal element doping, thereby achieving a balance between the thermal stability of the positive electrode and the thermal stability of the negative electrode.

In some embodiments, based on the total mass of the positive electrode active material, a mass percentage of the cobalt element is A%, and A and B satisfy at least one of the following conditions: 10≤A≤90; 0.05≤B≤0.5; or 6≤A/20B≤60. Without being limited to any theory, when the cobalt element is within this range, the structural stability of the positive electrode material can be further improved, thereby improving the thermal stability and high-temperature cycling stability of the battery at high voltages.

In some embodiments, 10≤A/20B≤20.

In some embodiments, the positive electrode active material includes Li_{α}Co_{1-x-y}MnₓM_{y}O_{β}, where M includes one or more of Mg, Al, Ca, Ti, Zr, V, Cr, Fe, Ni, Cu, Zn, Ru, or Sn, 0.95≤α≤1.4, 0<x≤0.4, 0≤y≤0.3, and 1.90≤β≤2.10.

In some embodiments, the sulfonyl imide lithium salt includes at least one of lithium bis(trifluoromethanesulfonyl)imide (LiTFSI) or lithium bis(fluorosulfonyl)imide (LiFSI).

In some embodiments, the electrolyte satisfies at least one of the following conditions:
(a) the electrolyte further includes a carboxylate ester, and the carboxylate ester includes at least one of methyl acetate, ethyl acetate, propyl acetate, ethyl propionate, propyl propionate, butyl propionate, pentyl propionate, halogenated methyl acetate, halogenated ethyl acetate, halogenated propyl acetate, halogenated ethyl propionate, halogenated propyl propionate, halogenated butyl propionate, or halogenated pentyl propionate,
   where based on the total mass of the electrolyte, a mass percentage of the carboxylate ester is X%, and 10≤X≤60;
(b) the electrolyte further includes ethylene carbonate and propylene carbonate, where based on the total mass of the electrolyte, a mass percentage of the ethylene carbonate is D%, and a mass percentage of the propylene carbonate is E%, where 5≤D+E≤40, and D≥E;
(c) the electrolyte further includes at least one of 1,3-propane sultone, ethylene sulfate, vinylene carbonate, a trinitrile compound, or a dinitrile compound;
(d) the electrolyte further includes at least one of lithium hexafluorophosphate, lithium tetrafluoroborate, lithium bis(oxalato)borate, lithium difluorooxalatoborate, or lithium difluorophosphate; or
(e) the electrolyte further includes a phosphate compound represented by formula 1, 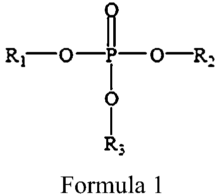 where R₁, R₂, and R₃ are each independently selected from at least one of an alkyl group having 1 to 10 carbon atoms, an alkoxy group having 1 to 10 carbon atoms, a fluorine-containing alkyl group having 1 to 10 carbon atoms, a fluorine-containing alkoxy group having 1 to 10 carbon atoms, a carbonate group, or a phosphate group.

Without being limited to any theory, the introduction of the carboxylate ester can significantly reduce the viscosity of the electrolyte and increase the conductivity of the electrolyte, thereby increasing the lithium ion transport rate in the battery, reducing battery polarization, and compensating for the deterioration of the kinetic performance and room-temperature performance caused by positive electrode doping elements.

Without being limited to any theory, adjusting percentages of the used ethylene carbonate and propylene carbonate can strengthen interfacial protection for the negative electrode, reduce the electrolyte consumption rate, and further improve the thermal stability and high-temperature cycling stability of the lithium-ion battery.

The inventors of this application have found that introducing a dinitrile/trinitrile compound into the electrolyte can suppress the dissolution of manganese ions and improve the thermal stability of the battery.

In some embodiments, the phosphate compound represented by formula 1 is fluorine-containing phosphate, where based on the total mass of the electrolyte, a mass percentage of the fluorine-containing phosphate is F%, and 0.5≤F≤10.

Without being limited to any theory, P and F radicals contained in the fluorine-containing phosphate can effectively capture oxygen released by the positive electrode in high-voltage and high-temperature states, significantly improving the high-temperature storage and safety performance of the battery. Without being limited to any theory, adjusting the above electrolyte additives within the ranges provided in this application can further strengthen an interfacial film, thereby further improving the thermal stability and high-temperature cycling stability of the lithium-ion battery.

In some embodiments, the electrochemical apparatus further includes a separator, and the separator includes a porous substrate and a porous coating disposed on at least one surface of the porous substrate, where the porous coating includes inorganic particles and a fluorine-containing binder.

In some embodiments, the separator satisfies at least one of the following conditions:
(f) the inorganic particles in the porous coating include at least one of magnesium hydroxide, boehmite, or aluminum oxide;
(g) the binder in the porous coating includes polyvinylidene fluoride; or
(h) an adhesion force between the porous coating and the positive electrode or the negative electrode is 4 N/m to 20 N/m.

In another embodiment, this application provides an electronic apparatus including the electrochemical apparatus according to some embodiments of this application.

The electrochemical apparatus provided by this application simultaneously achieves thermal stability at high voltages, high-temperature cycling stability, and improved hotbox performance.

Additional aspects and advantages of some embodiments of this application will be partially described and shown in the subsequent description or explained through the implementation of some embodiments of this application.

### DETAILED DESCRIPTION

To make the purpose, technical solutions, and advantages of this application clearer, the application is further described in detail below with reference to some embodiments. Apparently, the described embodiments are merely some embodiments rather than all embodiments of this application. All other technical solutions obtained by those of ordinary skill in the art based on some embodiments of this application fall within the protection scope of this application.

Some embodiments of this application will be described in detail below. These embodiments of this application should not be construed as limiting this application.

In addition, quantities, ratios, and other values are sometimes presented in the format of ranges in this specification. It should be understood that such format of ranges is used for convenience and brevity and should be flexibly interpreted to include not only the values explicitly specified as range limits but also all individual values or sub-ranges encompassed within the ranges, as if each value and sub-range are explicitly specified.

In specific embodiments and claims, a list of items connected by the terms "one of', "one piece of', and "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. Item A may include a single element or multiple elements. Item B may include a single element or multiple elements. Item C may include a single element or multiple elements.

In the specific embodiments and claims, a list of items connected by the terms "at least one of', "at least one piece of", "at least one kind of", or other similar terms may mean any combination of the listed items. For example, if items A and B are listed, the phrase "at least one of A or B" means only A, only B, or A and B. In another example, if items A, B, and C are listed, the phrase "at least one of A, B, or C" means only A, only B, only C, A and B (excluding C), A and C (excluding B), B and C (excluding A), or all of A, B, and C. Item A may include a single element or multiple elements. Item B may include a single element or multiple elements. Item C may include a single element or multiple elements.

### I. Electrochemical apparatus

In some embodiments, this application provides an electrochemical apparatus. The electrochemical apparatus includes a positive electrode, a negative electrode, and an electrolyte.

In some embodiments, the positive electrode includes a positive electrode active material, the positive electrode active material contains a manganese element and a cobalt element, and based on a total mass of the positive electrode active material, a mass percentage of the manganese element is B%; the electrolyte includes a sulfonyl imide lithium salt, and based on a total mass of the electrolyte, a mass percentage of the sulfonyl imide lithium salt is C%; where 0.1≤C≤15 and 0.02≤C/10B≤30.

In some embodiments, 0.05≤C/10B≤5.

In some embodiments, 0.05≤C/10B≤2.5.

In some embodiments, C is 0.1, 0.3, 0.5, 1, 1.5, 1.8, 2.0, 2.5, 3, 5, 8, 10, 12, 15, or a range defined by any two of these values.

In some embodiments, B is 0.01 to 15. In some embodiments, B is 0.01, 0.03, 0.05, 0.1, 0.15, 0.2, 0.25, 0.3, 0.5, 1, 3, 5, 10, 15, or a range defined by any two of these values.

In some embodiments, C/10B is 0.02, 0.03, 0.05, 0.1, 0.2, 0.25, 0.5, 1, 1.5, 2.0, 2.5, 3, 5, 8, 10, 12, 15, 20, 25, 30, or a range defined by any two of these values.

In some embodiments, based on the total mass of the positive electrode active material, a mass percentage of the cobalt element is A%, and A and B satisfy at least one of the following conditions: 10≤A≤90; 0.05≤B≤0.5; or 6≤A/20B≤60.

In some embodiments, 10≤A/20B≤20.

In some embodiments, A is 10, 20, 30, 40, 50, 55, 58, 60, 62, 65, 70, 80, 90, or a range defined by any two of these values.

In some embodiments, A/20B is 6, 8, 10, 12, 15, 18, 20, 25, 28, 30, 32, 35, 40, 45, 50, 55, 60, or a range defined by any two of these values.

In some embodiments, the positive electrode active material includes Li_{α}Co_{1-x-y}MnₓM_{y}O_{β}, where M includes one or more of Mg, Al, Ca, Ti, Zr, V, Cr, Fe, Ni, Cu, Zn, Ru, or Sn, 0.95≤α≤1.4, 0<x≤0.4, 0≤y≤0.3, and 1.90≤β≤2.10.

In some embodiments, the positive electrode active material includes lithium cobalt oxide.

In some embodiments, the sulfonyl imide lithium salt includes at least one of lithium bis(trifluoromethanesulfonyl)imide (LiTFSI) or lithium bis(fluorosulfonyl)imide (LiFSI).

In some embodiments, the electrolyte satisfies at least one of the following conditions:
(a) the electrolyte further includes a carboxylate ester, where based on the total mass of the electrolyte, a mass percentage of the carboxylate ester is X%, and 10≤X≤60;
(b) the electrolyte further includes ethylene carbonate and propylene carbonate, where based on the total mass of the electrolyte, a mass percentage of the ethylene carbonate is D%, and a mass percentage of the propylene carbonate is E%, where 5≤D+E≤40, and D≥E;
(c) the electrolyte further includes at least one of 1,3-propane sultone, ethylene sulfate, vinylene carbonate, a trinitrile compound, or a dinitrile compound;
(d) the electrolyte further includes at least one of lithium hexafluorophosphate, lithium tetrafluoroborate, lithium bis(oxalato)borate, lithium difluorooxalatoborate, or lithium difluorophosphate; or
(e) the electrolyte further includes a phosphate compound represented by formula 1, 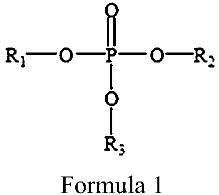 where R₁, R₂, and R₃ are each independently selected from at least one of an alkyl group having 1 to 10 carbon atoms, an alkoxy group having 1 to 10 carbon atoms, a fluorine-containing alkyl group having 1 to 10 carbon atoms, a fluorine-containing alkoxy group having 1 to 10 carbon atoms, a carbonate group, or a phosphate group.

In some embodiments, X is 10, 15, 20, 22, 28, 30, 32, 34, 36, 40, 50, 60, or a range defined by any two of these values.

In some embodiments, the carboxylate ester includes at least one of methyl acetate, ethyl acetate, propyl acetate, ethyl propionate, propyl propionate, butyl propionate, pentyl propionate, halogenated methyl acetate, halogenated ethyl acetate, halogenated propyl acetate, halogenated ethyl propionate, halogenated propyl propionate, halogenated butyl propionate, or halogenated pentyl propionate.

In some embodiments, D is 5 to 40. In some embodiments, D is 5, 7, 10, 15, 18, 20, 25, 30, 35, 38, 40, or a range defined by any two of these values.

In some embodiments, E is 0 to 20. In some embodiments, E is 0, 5, 8, 10, 15, 18, 20, or a range defined by any two of these values.

In some embodiments, D>E.

In some embodiments, D+E is 5, 7, 10, 15, 18, 20, 25, 30, 35, 38, 40, or a range defined by any two of these values.

In some embodiments, the trinitrile compound includes at least one of 1,3,5-pentanetricarbonitrile, 1,2,3-propanetricarbonitrile, 1,3,6-hexanetricarbonitrile, 1,2,6-hexanetricarbonitrile, 1,2,3-tris(2-cyanoethoxy)propane, 1,2,4-tris(2-cyanoethoxy)butane, or 1,2,5-tris(cyanoethoxy)pentane.

In some embodiments, the dinitrile compound includes at least one of succinonitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylsuccinonitrile, 2-methylglutaronitrile, 2,4-dimethylglutaronitrile, or 2,2,4,4-tetramethylglutaronitrile.

In some embodiments, a mass percentage of the 1,3-propane sultone, ethylene sulfate, vinylene carbonate, trinitrile compound, and/or dinitrile compound is 10% to 40%. In some embodiments, the mass percentage of the 1,3-propane sultone, ethylene sulfate, vinylene carbonate, trinitrile compound, and/or dinitrile compound is 10%, 15%, 18%, 20%, 25%, 30%, 35%, 38%, 40%, or a range defined by any two of these values.

In some embodiments, a mass percentage of the lithium hexafluorophosphate, lithium tetrafluoroborate, lithium bis(oxalato)borate, lithium difluorooxalatoborate, and/or lithium difluorophosphate is 0.1% to 15%. In some embodiments, the mass percentage of the lithium hexafluorophosphate, lithium tetrafluoroborate, lithium bis(oxalato)borate, lithium difluorooxalatoborate, and/or lithium difluorophosphate is 0.1%, 0.3%, 0.5%, 1%, 1.5%, 1.8%, 2.0%, 2.5%, 3%, 5%, 8%, 10%, 12%, 15%, or a range defined by any two of these values.

In some embodiments, the phosphate compound represented by formula 1 is fluorine-containing phosphate, where based on the total mass of the electrolyte, a mass percentage of the fluorine-containing phosphate is F%, and 0.5≤F≤10.

In some embodiments, F is 0.5, 2, 4, 6, 8, 10, or a range defined by any two of these values.

In some embodiments, the fluorine-containing phosphate includes at least one of methyl difluorophosphate, ethyl difluorophosphate, propyl difluorophosphate, tris(2,2,2-trifluoroethyl) phosphate, or dimethyl (fluoromethyl) acrylate.

In some embodiments, the electrolyte further includes diethyl carbonate (DEC). In some embodiments, based on the total mass of the electrolyte, a mass percentage of the diethyl carbonate is 20% to 70%. In some embodiments, based on the total mass of the electrolyte, the mass percentage of the diethyl carbonate is 20%, 30%, 40%, 50%, 60%, 70%, or a range defined by any two of these values.

In some embodiments, the positive electrode further includes a conductive agent. In some embodiments, the conductive agent includes at least one of carbon nanotubes, carbon fiber, acetylene black, graphene, Ketjen black, or carbon black.

In some embodiments, the positive electrode further includes a binder. In some embodiments, the binder includes at least one of polyvinylidene fluoride, carboxymethyl cellulose, styrene-butadiene rubber, polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, acrylic (acrylate) styrene-butadiene rubber, epoxy resin, or nylon.

In some embodiments, the current collector includes at least one of a copper foil or an aluminum foil.

In some embodiments, the positive electrode can be prepared by methods well known in the art. For example, the positive electrode can be obtained using the following method: mixing the positive electrode active material, conductive agent, and binder in a solvent to prepare an active material composition, and applying the active material composition on a current collector. In some embodiments, the solvent may include N-methylpyrrolidone or the like, but is not limited thereto.

In some embodiments, the electrochemical apparatus includes any apparatus in which an electrochemical reaction takes place.

In some embodiments, the electrochemical apparatus is a lithium secondary battery.

In some embodiments, the lithium secondary battery includes, but is not limited to: a lithium metal secondary battery, a lithium-ion secondary battery, a lithium polymer secondary battery, a lithium-ion polymer secondary battery, or an all-solid-state lithium secondary battery.

### Negative electrode

In some embodiments, the material, composition, and manufacturing method of the negative electrode used in the electrochemical apparatus of this application may adopt any technology disclosed in the prior art. In some embodiments, the negative electrode is the negative electrode recorded in the US patent application US9812739B, which is incorporated into this application by reference in its entirety.

In some embodiments, the negative electrode includes a current collector and a negative electrode active material layer disposed on the current collector. In some embodiments, the negative electrode active material layer includes a negative electrode active material. In some embodiments, the negative electrode active material includes, but is not limited to: lithium metal, structured lithium metal, natural graphite, artificial graphite, mesocarbon microbeads (MCMB), hard carbon, soft carbon, silicon, silicon-carbon composites, silicon-oxygen materials (for example, SiO and SiO₂), Li-Sn alloy, Li-Sn-O alloy, Sn, SnO, SnO₂, lithiated TiO₂-Li₄Ti₅O₁₂ with a spinel structure, Li-Al alloy, or any combination thereof.

In some embodiments, the negative electrode active material layer includes a binder. In some embodiments, the binder includes, but is not limited to, polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic (acrylate) styrene-butadiene rubber, epoxy resin, or nylon.

In some embodiments, the negative electrode active material layer includes a conductive material. In some embodiments, the conductive material includes, but is not limited to, natural graphite, artificial graphite, carbon black, acetylene black, Ketjen black, carbon fiber, metal powder, metal fiber, copper, nickel, aluminum, silver, or a polyphenylene derivative.

In some embodiments, the current collector includes, but is not limited to: a copper foil, a nickel foil, a stainless steel foil, a titanium foil, nickel foam, copper foam, or a polymer substrate coated with a conductive metal.

In some embodiments, the negative electrode can be obtained using the following method: mixing the active material, conductive material, and binder in a solvent to prepare an active material composition, and applying the active material composition on a current collector.

In some embodiments, the solvent may include, but is not limited to: deionized water, and N-methylpyrrolidone.

In some embodiments, a negative electrode in an all-solid-state lithium secondary battery is a lithium metal foil.

### Separator

In some embodiments, the electrochemical apparatus further includes a separator disposed between the positive electrode and the negative electrode, the separator includes a porous substrate and a porous coating disposed on at least one surface of the porous substrate, where the porous coating includes inorganic particles and a fluorine-containing binder.

In some embodiments, one surface of the porous substrate is provided with the porous coating. In some embodiments, two surfaces of the porous substrate are provided with the porous coating.

In some embodiments, the separator satisfies at least one of the following conditions:
(f) the inorganic particles in the porous coating include at least one of magnesium hydroxide, boehmite, or aluminum oxide;
(g) the binder in the porous coating includes polyvinylidene fluoride (PVDF); or
(h) an adhesion force between the porous coating and the positive electrode or the negative electrode is 4 N/m to 20 N/m.

In some embodiments, the adhesion force between the porous coating and the positive electrode or the negative electrode is 4 N/m, 6 N/m, 8 N/m, 10 N/m, 12 N/m, 16 N/m, 18 N/m, 20 N/m, or a range defined by any two of these values.

In some embodiments, the material and shape of the separator used in the electrochemical apparatus of this application are not particularly limited and may adopt any technology disclosed in the prior art.

In some embodiments, the porous substrate may use one or more of a polypropylene porous film, a polyethylene porous film, polypropylene nonwoven fabric, polyethylene nonwoven fabric, or a polypropylene-polyethylene-polypropylene porous composite film.

In some embodiments, based on a total mass of the inorganic particles and fluorine-containing binder in the porous coating, a mass percentage of the fluorine-containing binder is 10% to 70%. In some embodiments, based on the total mass of the inorganic particles and fluorine-containing binder in the porous coating, the mass percentage of the fluorine-containing binder is 10%, 20%, 30%, 40%, 50%, 60%, 70%, or a range defined by any two of these values.

In some embodiments, based on the total mass of the inorganic particles and fluorine-containing binder in the porous coating, a mass percentage of the inorganic particles is 30% to 90%. In some embodiments, based on the total mass of the inorganic particles and fluorine-containing binder in the porous coating, the mass percentage of the inorganic particles is 30%, 40%, 50%, 60%, 70%, 80%, 90%, or a range defined by any two of these values. The porous coating can improve the heat resistance and oxidation resistance of the separator as well as electrolyte infiltration performance, and enhance the adhesion between the separator and the electrode plates.

In some embodiments, the binder is selected from one of or a combination of polyvinylidene fluoride, a vinylidene fluoride-hexafluoropropylene copolymer, polytetrafluoroethylene, and polyhexafluoropropylene.

### Electrolytic salt

In some embodiments, the electrolytic salt used in the electrolyte of some embodiments of this application may include electrolytic salts known in the prior art. The electrolytic salt includes, but is not limited to: inorganic lithium salts, such as LiClO₄, LiPF₆, LiBF₄, LiSbF₆, LiSO₃F, and LiN(FSO₂)₂; fluorine-containing organic lithium salts, such as LiCF₃SO₃, LiN(FSO₂)(CF₃SO₂), LiN(CF₃SO₂)₂, LiN(C₂F₅SO₂)₂, cyclic 1,3-hexafluoropropane disulfonimide lithium, cyclic 1,2-tetrafluoroethane disulfonimide lithium, LiN(CF₃SO₂)(C₄F₉SO₂), LiC(CF₃SO₂)₃, LiPF₄(CF₃)₂, LiPF₄(C₂F₅)₂, LiPF₄(CF₃SO₂)₂, LiPF₄(C₂F₅SO₂)₂, LiBF₂(CF₃)₂, LiBF₂(C₂F₅)₂, LiBF₂(CF₃SO₂)₂, and LiBF₂(C₂F₅SO₂)₂; and dicarboxylic acid complex-containing lithium salts, such as lithium di(oxalato)borate, lithium difluoro(oxalato)borate, lithium tris(oxalato)phosphate, lithium difluorobis(oxalato)phosphate, and lithium tetrafluoro(oxalato)phosphate. In addition, the above electrolytic salts may be used alone, or two or more of them are used in combination. For example, in some embodiments, the electrolytic salt includes a combination of LiPF₆ and LiBF₄. In some embodiments, the electrolytic salt includes a combination of an inorganic lithium salt such as LiPF₆ or LiBF₄ and a fluorine-containing organic lithium salt such as LiCF₃SO₃, LiN(CF₃SO₂)₂, or LiN(C₂F₅SO₂)₂. In some embodiments, a concentration of the electrolytic salt is in a range of 0.8 to 3 mol/L, for example, in the range of 0.8 to 2.5 mol/L, 0.8 to 2 mol/L, 1 to 2 mol/L, 0.5 to 1.5 mol/L, 0.8 to 1.3 mol/L, 0.5 to 1.2 mol/L, or, for example, 1 mol/L, 1.15 mol/L, 1.2 mol/L, 1.5 mol/L, 2 mol/L, or 2.5 mol/L.

The preparation process of the electrochemical apparatus is well known to those skilled in the art, and this application imposes no particular limitations. For example, a lithium-ion battery can be manufactured according to the following process: stacking the positive electrode and negative electrode with a separator positioned therebetween, performing operations such as winding and folding on the resulting stack as needed, then placing the obtained structure into a housing, injecting an electrolyte into the housing, and sealing the housing. In addition, an over-current protection element, a guide plate, and the like may also be placed into the housing as needed to prevent internal pressure rise, over-charging, and over-discharging of the lithium-ion battery.

### II. Electronic apparatus

The electronic apparatus in this application may be any apparatus that uses the electrochemical apparatus according to some embodiments of this application.

In some embodiments, the electronic apparatus includes, but is not limited to: a notebook computer, a pen-input computer, a mobile computer, an e-book player, a portable phone, a portable fax machine, a portable copier, a portable printer, a head-mounted stereo headset, a video recorder, a liquid crystal display television, a portable cleaner, a portable CD player, a mini disc player, a transceiver, an electronic notebook, a calculator, a memory card, a portable recorder, a radio, a backup power supply, a motor, an automobile, a motorcycle, an assisted bicycle, a bicycle, a lighting fixture, a toy, a gaming console, a clock, an electric tool, a flashlight, a camera, a large household storage battery, or a lithium-ion capacitor.

The following takes a lithium-ion battery as an example and describes the preparation of a lithium-ion battery in combination with specific embodiments. Those skilled in the art will understand that the preparation methods described in this application are merely examples, and any other suitable preparation methods fall within the scope of this application.

### Examples

The following provides examples and comparative examples to describe some embodiments of this application in more details. Various tests and evaluations were conducted according to the methods described below. In addition, unless otherwise specified, "part" and "%" are based on weight.

### I. Test methods and devices:

### (1) Percentage test of Co and Mn metal elements in positive electrode active material:

An active material of a positive electrode plate cleaned with DMC (dimethyl carbonate) was scraped off with a scraper and dissolved in a mixture solvent (for example, 0.4 g of the positive electrode active material was dissolved in a mixture solvent formed by 10 ml aqua regia (a mixture of nitric acid and hydrochloric acid at a ratio of 1:1) and 2 ml HF), with a volume being adjusted to 100 mL; and then percentages of metal elements such as Co and Mn in the solution were tested using an ICP analyzer, measured in %.

### (2) High-temperature cycling performance test of lithium-ion battery:

At 45°C, a lithium-ion battery was charged at a constant current of 0.7C (rate) to 4.5 V, then charged at a constant voltage until the current reached 0.05C, and then discharged at a constant current of 1C to 3.0 V. This process constituted one charge-discharge cycle, which was the first cycle, and a discharge capacity of the lithium-ion battery in the first cycle was recorded. The lithium-ion battery was subjected to charge-discharge cycles according to the above method, with the discharge capacity being recorded for each cycle until the discharge capacity of the lithium-ion battery decayed to 80% of the discharge capacity of the first cycle, and the number of charge-discharge cycles was recorded.

### (3) Room-temperature cycling performance test of lithium-ion battery:

At 25°C, the lithium-ion battery was charged at a constant current of 0.7C (rate) to 4.5 V, then charged at a constant voltage until the current reached 0.05C, and then discharged at a constant current of 1C to 3.0 V. This process constituted one charge-discharge cycle, which was the first cycle, and a discharge capacity of the lithium-ion battery in the first cycle was recorded. The lithium-ion battery was subjected to charge-discharge cycles according to the above method, with the discharge capacity being recorded for each cycle until the discharge capacity of the lithium-ion battery decayed to 80% of the discharge capacity of the first cycle, and the number of charge-discharge cycles was recorded.

### (4) Hotbox (Hotbox) safety test of lithium-ion battery:

Before thermal shock, a cell was fully charged, and the appearance was inspected and photographed before and after the test; a temperature sensor was attached to the center of an outer surface of the cell; and a sample was placed vertically in a chamber, heated at a temperature rise rate of 2±2°C to a required test temperature (130/135)±2°C, and maintained at the temperature for 60 min; where measurement frequency: voltage and internal resistance were measured at a 1 kHz specification, and measured after preprocessing and after the test; and test criteria: no fire and no explosion indicates a pass. "5/10 Pass" means that 10 batteries were tested in each example, and five passed the test.

### II. Preparation of lithium-ion battery

### Examples 1 to 11 and Comparative Examples 1 to 3

### (1) Preparation of modified positive electrode active material:

Commercially available lithium cobalt oxide (LiCoO₂) and manganese tetroxide (Mn₃O₄) were mixed, and blended in a high-speed mixer at 300 r/min for 20 min, the mixture was placed in an air kiln, heated to 820°C at 5°C/min, maintained at the temperature for 24 h, cooled naturally, taken out, and sieved through a 300-mesh sieve to obtain a modified positive electrode active material (that is, modified LiCoO₂). A percentage of the metal element Mn in the modified positive electrode active material is shown in Table 1.

### (2) Preparation of positive electrode plate

The modified LiCoO₂, a conductive agent carbon nanotubes (CNT), and a binder polyvinylidene fluoride were mixed at a mass ratio of 95:2:3, N-methylpyrrolidone (NMP) was added as a solvent, and the mixture was stirred under the action of a vacuum mixer until the system became uniform, forming a positive electrode slurry with a solid content of 75wt%. The positive electrode slurry was uniformly applied on one side of a 12 µm thick positive electrode current collector aluminum foil, dried at 85°C, and cold-pressed to obtain a positive electrode plate having a positive electrode active material layer with a thickness of 100 µm, then the above steps were repeated on the other surface of the positive electrode plate to obtain a positive electrode plate coated with the positive electrode active material layers on both surfaces. The positive electrode plate was cut into a specification of 74 mm × 867 mm and welded with tabs for use.

### (3) Preparation of negative electrode plate

A negative electrode active material artificial graphite, styrene-butadiene rubber (SBR), and carboxymethyl cellulose (CMC) were mixed at a mass ratio of 95:2:3, then deionized water was added as a solvent to prepare a slurry with a solid content of 70wt%, and the slurry was stirred uniformly. The slurry was uniformly applied on one surface of an 8 µm thick copper foil, dried at 110°C, and cold-pressed to obtain a negative electrode plate having one surface coated with a negative electrode active material layer with a thickness of 150 µm. The above coating steps were repeated on the other surface of the negative electrode plate to obtain a negative electrode plate having both surfaces coated with the negative electrode active material layer. The negative electrode plate was cut into a specification of (74 mm × 867 mm) and welded with tabs for use. A defect degree Id/Ig of the negative electrode plate was 0.17.

### (4) Preparation of electrolyte

In an argon atmosphere glove box with a water content of less than 10 ppm, ethylene carbonate (EC), propylene carbonate (PC), and diethyl carbonate (DEC) were uniformly mixed at a mass ratio of 20:20:60 as a base solvent; and a sulfonyl imide lithium salt and lithium hexafluorophosphate (LiPF₆) were added to the base solvent and stirred uniformly to form an electrolyte, where a mass percentage of LiPF₆ was 10%, and a specific mass percentage of the sulfonyl imide lithium salt is shown in Table 1. The sum of the percentages of all substances in the electrolyte was 100%.

### (5) Preparation of separator

A 12 µm thick polyethylene (PE) porous polymer film was used as the separator.

### (6) Preparation of lithium-ion battery

The positive electrode plate, separator, and negative electrode plate were stacked in order, with the separator positioned between the positive electrode plate and the negative electrode plate to provide isolation, and wound to obtain an electrode assembly. The electrode assembly was placed in an aluminum-plastic film packaging bag, moisture was removed at 80°C, and the prepared electrolyte was injected, followed by processes such as vacuum encapsulation, standing, formation, and shaping to obtain a lithium-ion battery.

### Examples 12 to 17

### Preparation of electrolyte:

In an argon atmosphere glove box with a water content of less than 10 ppm, ethylene carbonate (EC), propylene carbonate (PC), diethyl carbonate (DEC), and a carboxylate ester were uniformly mixed at a mass ratio of 20:20:(60-X):X as a base solvent; and LiPF₆ and a sulfonyl imide lithium salt LiFSI were added to the base solvent and stirred uniformly to form an electrolyte, where based on a total mass of the electrolyte, a mass percentage of LiPF₆ was 10%, and a mass percentage of the sulfonyl imide lithium salt was 5%. The type and mass percentage of the carboxylate ester, as well as changes in related preparation parameters and performance, are shown in Table 2. The percentage of the carboxylate ester in Table 2 was calculated based on a total mass of the base solvent. The sum of the percentages of all substances in the electrolyte was 100%.

These examples were the same as Example 2 except for the preparation of the electrolyte.

### Examples 18 to 24

### Preparation of electrolyte:

In an argon atmosphere glove box with a water content of less than 10 ppm, ethylene carbonate (EC), propylene carbonate (PC), diethyl carbonate (DEC), and/or propyl propionate (PP) were uniformly mixed as a base solvent; and LiPF₆ and a sulfonyl imide lithium salt LiFSI were added to the base solvent and stirred uniformly to form an electrolyte, where based on a total mass of the electrolyte, a mass percentage of LiPF₆ was 10%, and a mass percentage of the sulfonyl imide lithium salt was 5%. The mass percentages of other substances and changes in related preparation parameters and performance are shown in Table 3. The percentages of EC, PC, and PP in Table 3 were calculated based on a total mass of the base solvent. The sum of the percentages of all substances in the electrolyte was 100%.

These examples were the same as Example 2 except for the preparation of the electrolyte.

### Examples 25 to 29

### Preparation of electrolyte:

In an argon atmosphere glove box with a water content of less than 10 ppm, ethylene carbonate (EC), propylene carbonate (PC), diethyl carbonate (DEC), and/or propyl propionate (PP) were uniformly mixed as a base solvent; and LiPF₆, LiFSI, and/or a compound of formula 1 (tris(2,2,2-trifluoroethyl) phosphate) were added to the base solvent and stirred uniformly to form an electrolyte, where based on a total mass of the electrolyte, a mass percentage of LiPF₆ was 10%, and a mass percentage of the sulfonyl imide lithium salt was 5%. Specific mass percentages of other substances and performance are shown in Table 4. The percentages of EC, PC, and PP in Table 4 were calculated based on a total mass of the base solvent. The mass percentage of the tris(2,2,2-trifluoroethyl) phosphate in Table 4 was calculated based on the total mass of the electrolyte. The sum of the percentages of all substances in the electrolyte was 100%.

### Examples 30 to 38

In an argon atmosphere glove box with a water content of less than 10 ppm, ethylene carbonate (EC), propylene carbonate (PC), diethyl carbonate (DEC), and/or propyl propionate (PP) were uniformly mixed as a base solvent; and LiPF₆, LiFSI, and/or a compound of formula 1 (tris(2,2,2-trifluoroethyl) phosphate) were added to the base solvent and stirred uniformly to form an electrolyte, where based on a total mass of the electrolyte, a mass percentage of LiPF₆ was 10%, and a mass percentage of the sulfonyl imide lithium salt was 5%. Specific mass percentages of other substances and performance are shown in Table 5. The percentages of EC, PC, and PP in Table 5 were calculated based on a total mass of the base solvent. The mass percentage of the tris(2,2,2-trifluoroethyl) phosphate in Table 5 was calculated based on the total mass of the electrolyte. The sum of the percentages of all substances in the electrolyte was 100%.

### Preparation of separator:

According to the settings of the examples in Table 5, a certain percentage of binder was dispersed in a solvent system, then a corresponding percentage of inorganic particles were added, and the mixture was thoroughly stirred and mixed uniformly, and applied on both surfaces of the separator substrate, followed by drying to obtain a separator with a porous coating.

These examples were the same as Example 2 except for the preparation of the electrolyte and separator.

**Table 1**

| | Mass percentage A of Co element (%) | Mass percentage B of Mn element (%) | A/20B | Type and mass percentage C of sulfonyl imide lithium salt (%) | | C/10B | Hotbox test at 130°C for 1 h | Hotbox test at 135°C for 1 h |
|---|---|---|---|---|---|---|---|---|
| | | | | LiFSI | LiTFSI | | | |
| Example 1 | 60 | 0.3 | 10 | 0.5 | 0 | 0.17 | 5/10 Pass | 3/10 Pass |
| Example 2 | 60 | 0.2 | 15 | 0.5 | 0 | 0.25 | 5/10 Pass | 4/10 Pass |
| Example 3 | 60 | 0.1 | 30 | 0.5 | 0 | 0.5 | 3/10 Pass | 2/10 Pass |
| Example 4 | 60 | 0.05 | 60 | 0.5 | 0 | 1 | 2/10 Pass | 1/10 Pass |
| Example 5 | 60 | 0.2 | 15 | 0 | 0.1 | 0.05 | 6/10 Pass | 5/10 Pass |
| Example 6 | 60 | 0.2 | 15 | 0 | 2.5 | 1.25 | 10/10 Pass | 9/10 Pass |
| Example 7 | 60 | 0.2 | 15 | 2.5 | 2.5 | 2.5 | 7/10 Pass | 6/10 Pass |
| Example 8 | 60 | 0.2 | 15 | 2.5 | 0 | 1.25 | 8/10 Pass | 7/10 Pass |
| Example 9 | 60 | 0.2 | 15 | 0 | 5 | 2.5 | 6/10 Pass | 5/10 Pass |
| Example 10 | 59.5 | 0.2 | 15 | 0 | 5 | 2.5 | 6/10 Pass | 5/10 Pass |
| Example 11 | 60.7 | 0.2 | 15 | 0 | 5 | 2.5 | 6/10 Pass | 5/10 Pass |
| Comparative Example 1 | 60 | 0.2 | 15 | 0 | 0 | 0 | 4/10 Pass | 2/10 Pass |
| Comparative Example 2 | 60 | 0.5 | 6 | 0 | 0 | 0 | 2/10 Pass | 1/10 Pass |
| Comparative Example 3 | 60 | 0.01 | 300 | 0 | 0 | 0 | 1/10 Pass | 0/10 Pass |

From Examples 1 to 11 and Comparative Examples 1 to 3 in Table 1, it can be seen that by adjusting C/10B within the range provided in this application, the pass rates of the lithium-ion battery in the hotbox test at 130°C and the hotbox test at 135°C are significantly improved. Without being limited to any theory, this may be because Mn is stable to O, which improves the structural stability of the positive electrode material. However, it was also found that an excessively high percentage of the Mn element deteriorates the thermal stability of the negative electrode, and under this condition, by introducing the sulfonyl imide lithium salt into the electrolyte, both the thermal stability of the positive electrode and the thermal stability of the negative electrode can be achieved. The effect is most significant when C/10B is within the above range. Without being limited to any theory, this may be due to the introduction of the sulfonyl imide lithium salt, which suppresses the dissolution of manganese ions and improves the thermal stability and ionic conductivity of the electrolyte, compensating for the deterioration of dissolution of the positive electrode material caused by metal element doping, thereby achieving a balance in the thermal stability of the positive electrode and the negative electrode.

From Examples 1 to 11 and Comparative Examples 1 to 3 in Table 1, it can also be seen that when C/10B is within the range provided in this application, further adjusting A/20B within the range provided in this application can further improve the pass rates of the lithium-ion battery in the hotbox test at 130°C and the hotbox test at 135°C.

**Table 2**

| | Mass percentage A of Co element (%) | Mass percentage B of Mn element (%) | A/20B | Mass percentage C of LiFSI (%) | Type and mass percentage X of carboxylate ester (%) | | | C/10B | Cycles at 45°C | Cycles at 25°C |
|---|---|---|---|---|---|---|---|---|---|---|
| | | | | | Ethyl propionate | Propyl propionate | Ethyl acetate | | | |
| Example 12 | 60 | 0.2 | 15 | 5 | 0 | 0 | 0 | 2.5 | 550 | 760 |
| Example 13 | 60 | 0.2 | 15 | 5 | 30 | 0 | 0 | 2.5 | 570 | 790 |
| Example 14 | 60 | 0.2 | 15 | 5 | 0 | 30 | 0 | 2.5 | 580 | 780 |
| Example 15 | 60 | 0.2 | 15 | 5 | 0 | 0 | 30 | 2.5 | 565 | 785 |
| Example 16 | 60 | 0.2 | 15 | 5 | 10 | 10 | 10 | 2.5 | 580 | 800 |
| Example 17 | 60 | 0.2 | 15 | 5 | 20 | 10 | 10 | 2.5 | 585 | 795 |

From Examples 12 to 17 in Table 2, it can be seen that introducing an appropriate percentage of carboxylate ester into the electrolyte is extremely conducive to improving the cycling performance of the battery. Without being limited to any theory, this may be due to the introduction of the carboxylate ester, which can significantly reduce the viscosity of the electrolyte and increase the conductivity of the electrolyte, thereby increasing the lithium ion transport rate in the battery, reducing battery polarization, and compensating for the deterioration of the kinetic performance and room-temperature performance caused by positive electrode doping elements.

**Table 3**

| | Mass percentag eA of Co element (%) | Mass percentage B of Mn element (%) | A/20B | Mass percentage X of carboxylate ester (%) | Mass percentage D of ethylene carbonate (%) | Mass percentage E of propylene carbonate (%) | Mass percentage C of LiFSI (%) | C/10B | Cycles at 45°C | Cycles at 25°C |
|---|---|---|---|---|---|---|---|---|---|---|
| | | | | Propyl propionate | | | | | | |
| Example 18 | 60 | 0.2 | 15 | 0 | 20 | 20 | 5 | 2.5 | 580 | 780 |
| Example 19 | 60 | 0.2 | 15 | 0 | 30 | 10 | 5 | 2.5 | 610 | 800 |
| Example 20 | 60 | 0.2 | 15 | 0 | 20 | 10 | 5 | 2.5 | 630 | 790 |
| Example 21 | 60 | 0.2 | 15 | 0 | 10 | 0 | 5 | 2.5 | 570 | 760 |
| Example 22 | 60 | 0.2 | 15 | 30 | 20 | 10 | 5 | 2.5 | 660 | 830 |
| Example 23 | 60 | 0.2 | 15 | 0 | 10 | 30 | 5 | 2.5 | 450 | 620 |
| Example 24 | 60 | 0.2 | 15 | 0 | 15 | 35 | 5 | 2.5 | 420 | 580 |

From Examples 18 to 22 and Examples 23 to 24 in Table 3, it can be seen that when D and E are within the ranges provided in this application, the lithium-ion battery can achieve better cycling performance. Without being limited to any theory, adjusting the percentages of the used ethylene carbonate and propylene carbonate can strengthen the interfacial protection for the negative electrode, reduce the electrolyte consumption rate, and further improve the thermal stability and high-temperature cycling stability of the lithium-ion battery.

**Table 4**

| | Mass percentage A of Co element (%) | Mass percentage B of Mn element (%) | A/20B | Mass percentage X of carboxylate ester (%) | Mass percentage D of ethylene carbonate (%) | Mass percentage E of propylene carbonate (%) | Mass percentage C of LiFSI (%) | C/10B | Mass percentage of tris(2,2,2-trifluoroethyl) phosphate (%) | Cycles at 45°C | Cycles at 25°C |
|---|---|---|---|---|---|---|---|---|---|---|---|
| | | | | Propyl propionate | | | | | | | |
| Example 25 | 60 | 0.2 | 15 | 0 | 20 | 20 | 5 | 2.5 | 0 | 580 | 780 |
| Example 26 | 60 | 0.2 | 15 | 0 | 20 | 20 | 5 | 2.5 | 0.5 | 600 | 805 |
| Example 27 | 60 | 0.2 | 15 | 0 | 20 | 20 | 5 | 2.5 | 1 | 610 | 815 |
| Example 28 | 60 | 0.2 | 15 | 0 | 20 | 10 | 5 | 2.5 | 1 | 630 | 850 |
| Example 29 | 60 | 0.2 | 15 | 30 | 20 | 10 | 5 | 2.5 | 1 | 650 | 880 |

From Examples 25 to 29 in Table 4, it can be seen that introducing some phosphate additives such as tris(2,2,2-trifluoroethyl) phosphate into the electrolyte can further improve the cycling stability of the battery. Without being limited to any theory, P and F radicals contained in the fluorine-containing phosphate can effectively capture oxygen released by the positive electrode in high-voltage and high-temperature states, significantly improving the high-temperature storage and safety performance of the battery. Without being limited to any theory, adjusting the above electrolyte additives within the ranges provided in this application can further strengthen an interfacial film, thereby further improving the thermal stability and high-temperature cycling stability of the lithium-ion battery.

**Table 5**

| | Porous coating | | Adhesion force between porous coating of separator and electrode plate (N/m) | Mass percentage X of carboxylate ester (%) | Mass percentage D of ethylene carbonate (%) | Mass percentage E of propylene carbonate (%) | Mass percentage of tris(2,2,2-trifluoroethyl) phosphate (%) | Cycles at 45°C | Cycles at 25°C |
|---|---|---|---|---|---|---|---|---|---|
| | Compositio n and mass percentage of fluorine-containing binder | Composition and mass percentage of inorganic particles | | Propyl propionate | | | | | |
| Example 30 | 0 | 0 | 0 | 0 | 20 | 20 | 0 | 580 | 780 |
| Example 31 | 20% PVDF | 80% Al₂O₃ | 4 | 0 | 20 | 20 | 0 | 600 | 800 |
| Example 32 | 30% PVDF | 70% Al₂O₃ | 7 | 0 | 20 | 20 | 0 | 610 | 820 |
| Example 33 | 40% PVDF | 60% Al₂O₃ | 12 | 0 | 20 | 20 | 0 | 615 | 830 |
| Example 34 | 60% PVDF | 40% Al₂O₃ | 20 | 0 | 20 | 20 | 0 | 600 | 810 |
| Example 35 | 40% PVDF | 60% MgOH | 12 | 30 | 20 | 10 | 0 | 670 | 890 |
| Example 36 | 40% PVDF | 60% Al₂O₃ | 12 | 30 | 20 | 10 | 1 | 690 | 910 |
| Example 37 | 40% PVDF | 60% Al₂O₃ | 12 | 30 | 20 | 20 | 1 | 650 | 860 |
| Example 38 | 40% PVDF | 60% Al₂O₃ | 12 | 0 | 20 | 10 | 1 | 630 | 835 |

From the comparison between Examples 31 to 38 and Example 30 in Table 5, it can be seen that using a separator with a porous coating can further improve the high-temperature cycling performance and room-temperature cycling performance of the lithium-ion battery.

References to "some embodiments", "specific embodiments", "one embodiment", "another example", "example", "specific example", or "some examples" throughout this specification mean that at least one embodiment or example of this application includes the specific feature, structure, material, or characteristic described in that embodiment or example. Therefore, descriptions in various places throughout this specification, such as "in some embodiments", "in these embodiments", "in one embodiment", "in another example", "in an example", "in a specific example", or "example", do not necessarily refer to the same embodiment or example of this application. In addition, the specific feature, structure, material, or characteristic herein may be combined in any appropriate manner in one or more embodiments or examples.

Although illustrative embodiments have been demonstrated and described, those skilled in the art should understand that the above embodiments cannot be construed as limiting this application, and changes, substitutions, and modifications may be made to some embodiments without departing from the spirit, principles, and scope of this application.

## Claims

1. An electrochemical apparatus, comprising a positive electrode, a negative electrode, and an electrolyte, wherein
the positive electrode comprises a positive electrode active material, the positive electrode active material contains a manganese element and a cobalt element, and based on a total mass of the positive electrode active material, a mass percentage of the manganese element is B%;
the electrolyte comprises a sulfonyl imide lithium salt, and based on a total mass of the electrolyte, a mass percentage of the sulfonyl imide lithium salt is C%; wherein
0.1≤C≤15; and
0.02≤C/10B≤30.

2. The electrochemical apparatus according to claim 1, wherein 0.05≤C/10B≤5.

3. The electrochemical apparatus according to claim 1, wherein 0.05≤C/10B≤2.5.

4. The electrochemical apparatus according to claim 1, wherein based on the total mass of the positive electrode active material, a mass percentage of the cobalt element is A%, and A and B satisfy at least one of the following conditions:
10≤A≤90;
0.05≤B≤0.5; or
6≤A/20B≤60.

5. The electrochemical apparatus according to claim 4, wherein 10≤A/20B≤20.

6. The electrochemical apparatus according to claim 1, wherein the positive electrode active material comprises Li_{α}Co_{1-x-y}MnₓM_{y}O_{β}, wherein M comprises one or more of Mg, Al, Ca, Ti, Zr, V, Cr, Fe, Ni, Cu, Zn, Ru, or Sn, 0.95≤α≤1.4, 0<x≤0.4, 0≤y≤0.3, and 1.90≤β≤2.10.

7. The electrochemical apparatus according to claim 1, wherein the sulfonyl imide lithium salt comprises at least one of lithium bis(trifluoromethanesulfonyl)imide (LiTFSI) or lithium bis(fluorosulfonyl)imide (LiFSI).

8. The electrochemical apparatus according to claim 1, wherein the electrolyte satisfies at least one of the following conditions:
(a) the electrolyte further comprises a carboxylate ester, the carboxylate ester comprises at least one of methyl acetate, ethyl acetate, propyl acetate, ethyl propionate, propyl propionate, butyl propionate, pentyl propionate, halogenated methyl acetate, halogenated ethyl acetate, halogenated propyl acetate, halogenated ethyl propionate, halogenated propyl propionate, halogenated butyl propionate, or halogenated pentyl propionate,
wherein based on the total mass of the electrolyte, a mass percentage of the carboxylate ester is X%, and 10≤X≤60;
(b) the electrolyte further comprises ethylene carbonate and propylene carbonate, wherein based on the total mass of the electrolyte, a mass percentage of the ethylene carbonate is D%, and a mass percentage of the propylene carbonate is E%, wherein 5≤D+E≤40, and D≥E;
(c) the electrolyte further comprises at least one of 1,3-propane sultone, ethylene sulfate, vinylene carbonate, a trinitrile compound, or a dinitrile compound;
(d) the electrolyte further comprises at least one of lithium hexafluorophosphate, lithium tetrafluoroborate, lithium bis(oxalato)borate, lithium difluorooxalatoborate, or lithium difluorophosphate; or
(e) the electrolyte further comprises a phosphate compound represented by formula 1, 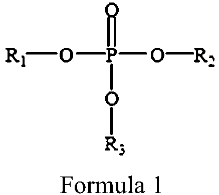 wherein R₁, R₂, and R₃ are each independently selected from at least one of an alkyl group having 1 to 10 carbon atoms, an alkoxy group having 1 to 10 carbon atoms, a fluorine-containing alkyl group having 1 to 10 carbon atoms, a fluorine-containing alkoxy group having 1 to 10 carbon atoms, a carbonate group, or a phosphate group.

9. The electrochemical apparatus according to claim 8, wherein the phosphate compound represented by formula 1 is fluorine-containing phosphate, and based on the total mass of the electrolyte, a mass percentage of the fluorine-containing phosphate is F%, wherein 0.5≤F≤10.

10. The electrochemical apparatus according to claim 1, further comprising a separator, the separator comprising a porous substrate and a porous coating disposed on at least one surface of the porous substrate, wherein the porous coating comprises inorganic particles and a fluorine-containing binder.

11. The electrochemical apparatus according to claim 10, wherein the separator satisfies at least one of the following conditions:
(f) the inorganic particles in the porous coating comprise at least one of magnesium hydroxide, boehmite, or aluminum oxide;
(g) the binder in the porous coating comprises polyvinylidene fluoride; or
(h) an adhesion force between the porous coating and the positive electrode or the negative electrode is 4 N/m to 20 N/m.

12. An electronic apparatus, comprising the electrochemical apparatus according to any one of claims 1 to 11.
